(19) Europäisches Patentamt
European Patent Office
Office européen des brevets

(11) **EP 2 045 590 B1**

(12) **EUROPEAN PATENT SPECIFICATION**

(45) Date of publication and mention
of the grant of the patent:
**11.06.2014 Bulletin 2014/24**

(51) Int Cl.:
***G01J 5/00*** *(2006.01)*

(21) Application number: **08150293.2**

(22) Date of filing: **15.01.2008**

(54) **Method and apparatus for non-contact temperature measurement**

Verfahren und Vorrichtung zur kontaktlosen Temperaturmessung

Procédé et appareil pour mesure de température sans contact

(84) Designated Contracting States:
**DE FR IT**

(30) Priority: **03.10.2007 TW 96137023**

(43) Date of publication of application:
**08.04.2009 Bulletin 2009/15**

(73) Proprietor: **AViTA Corporation**
**Sanchong City 241 (TW)**

(72) Inventors:
• **Chen, Kun-Sung**
**241, Sanchong City (TW)**

• **Lin, Ying-Chao**
**241, Sanchong City (TW)**
• **Ou, Yang Hsing**
**241, Sanchong City (TW)**

(74) Representative: **Schwerbrock, Florian**
**Danziger Straße 35a**
**20099 Hamburg (DE)**

(56) References cited:
**WO-A-98/01730    US-A1- 2003 099 277**

## Description

## BACKGROUND OF THE INVENTION

### Field of the Invention

The present invention relates to a method and apparatus for temperature measurement, and more particularly to a method and apparatus for non-contact temperature measurement.

### Description of the Prior Art

Given that conventional contact thermometers (for example, mercury or electronic thermometers) are falling short of consumers' needs, it is necessary to further develop methods and apparatuses for temperature measurement that enable measurements to be quicker, more accurate, easier to be carried out, easier to read its result, more harmless, and more user-friendly. Currently, non-contact temperature measurement apparatuses using infrared radiation, e.g. infrared ear thermometers or forehead thermometers, have the above-mentioned advantages and have thus constituted a major part of temperature measurement apparatuses on the market. The most significant advantage of an infrared thermometer lies in measuring a target's temperature by non-contact means, and it is especially useful when the target is extremely hot, dangerous to touch, or not accessible.

When a user presses a switch button on a conventional infrared thermometer, a probe of the thermometer will point to the target and measurement of the target's temperature can be taken in a non-contact way. During the process, the measurement is taken with indistinct distances between the probe of the infrared thermometer and the target. The various distances between the target and the infrared thermometer then generate different outcomes of temperature value in each measurement, and thus, errors and uncertainties of the measurement increase.

US2003/0099277 seems to disclose an apparatus for non-contact temperature measurement, comprising: a radiation emitter and receiver device for emitting a radiation; an alarm unit for giving an alarm when the radiation emitter and receiver device measures a predetermined distance value; a temperature sensor unit for measuring the target's temperature after the alarm unit gives the alarm; a microprocessor unit for storing the predetermined distance value and the temperature value measured by the temperature sensor unit , for processing a distance signal indicating the target's distance measured by the radiation emitter and receiver device and a temperature signal indicating the target's temperature measured by the temperature sensor unit , and for sending a command to the alarm unit so as to give an alarm when the target's distance value measured by the radiation emitter and receiver device equals the predetermined distance value; and a display unit for displaying the target's temperature value measured by the temperature sensor unit and processed by the microprocessor unit subsequently.

## SUMMARY OF THE INVENTION

One purpose of the present invention is to provide an apparatus for non-contact temperature measurement capable of setting a predetermined distance value before measuring a target's distance so as to reduce errors and to measure the target's temperature value more accurately.

According to the present invention, an apparatus for non-contact temperature measurement as claimed in claim 1 is provided. Further, a method for non-contact temperature measurement as claimed in claim 13 is provided. The subclaims show some examples of such an apparatus or method, respectively.

Various embodiments of, the present invention provide an apparatus for non-contact temperature measurement comprising a distance sensor unit, an alarm unit, a temperature sensor unit, a microprocessor unit and a display unit. The distance sensor unit measures a target's distance value. The alarm unit gives an alarm after the distance sensor unit measures a predetermined distance value of the target. The temperature sensor unit measures a target's temperature after the alarm unit gives the alarm. The microprocessor unit stores the predetermined distance value and the temperature value measured by the temperature sensor unit; the microprocessor unit further processes a distance signal sent by the distance sensor unit and a temperature signal sent by the temperature sensor unit. When the measured distance value of the target equals the predetermined distance value, the microprocessor unit sends a command for the alarm unit to give an alarm. The display unit displays the temperature value measured by the temperature sensor unit and subsequently processed by the microprocessor unit.

It is preferable that the apparatus further comprises a push-button unit for an operator to input a command that makes the temperature sensor unit to start measuring the target's temperature after the distance sensor unit measures the predetermined distance value.

It is preferable that the push-button unit is a button switch.

The distance sensor unit is a radiation emitter and receiver device.

The radiation emitter and receiver device is an infrared emitter and receiver device.

It is preferable that the infrared emitter and receiver device includes an infrared emitter and an infrared receiver.

It is preferable that the infrared emitter is for emitting radiation, and the infrared receiver is for receiving the radiation reflected from the target that has been hit by the radiation emitted by the infrared emitter. The received radiant energy is then converted into electrical energy in the form of digital signals; by identifying the voltage output of the electrical energy, the distance between the target and the infrared emitter and receiver device can be measured.

It is preferable that an isolation board is further disposed between the infrared emitter and the infrared receiver so that the infrared receiver is ensured to receive the reflected radiation.

It is preferable that the temperature sensor unit is an infrared sensor or ultrasonic sensor for measuring a temperature value.

It is preferable that the alarm unit is a speaker or an indicator light, or a combination of both. The speaker gives an alarm of long beep, and the indicator light is an LED light.

Various embodiments provide a method for non-contact temperature measurement including the following steps: setting a predetermined distance value, measuring a target's distance value, determining whether the target's distance value equals the predetermined distance value, giving an alarm, measuring the target's temperature value and storing the measurement data into memory, and displaying the stored measurement data.

The target's distance value is measured by a means associated with radiant energy.

It is preferable that said means associated with radiant energy is employed by, first, receiving the reflected radiation of an infrared wave that has hit the target, and by subsequently, converting the radiant energy to electrical energy in the form of digital signals. Said means is described in detail as follows. First, a first distance $L_1$ closest to the infrared emitter and receiver device and a second distance $L_2$ farthest from the infrared emitter and receiver device are measured. Second, the individual radiant energy values of infrared radiation reflected at a distance of $L_1$ and at a distance of $L_2$ are converted respectively to values $AD_1$ and $AD_2$ of the electrical energy in the form of digital signals. Third, a slope formula

$$S = \frac{AD_2 - AD_1}{L_2 - L_1}$$ is applied to obtain the slope between two points, and accordingly, the different values of the electrical energy at different distances are obtained. The target's distance value, which is the result being sought for, can be further calculated by reversing the formula.

The radiation is infrared radiation.

It is preferable that after the step of giving an alarm, the method further includes a step of a button switch being pressed by the operator so that measurement of the target's temperature is activated accordingly.

An aspect of the present invention is a method and apparatus for non-contact temperature measurement that measure a target's distance by referring to a predetermined distance. The present invention enables operators to measure temperature more quickly and gain a more accurate result. The objective of reducing errors and uncertainties is then achieved.

Further scope of the applicability of the present invention will become apparent from the detailed description given hereinafter. It should be understood, however, that the detailed description and specific examples, while indicating preferred embodiments of the invention, are given by way of illustration only, since various changes and modifications of the invention will become apparent to those skilled in the art from this detailed description.

## BRIEF DESCRIPTION OF THE DRAWINGS

Fig. 1 is a block diagram of the apparatus for non-contact temperature measurement of the present invention;
Fig. 2 is a schematic view showing the use of the apparatus of the present invention;
Fig. 3 is a schematic view showing measuring the target's distance value with the apparatus of the present invention;
Fig. 4 is a curve diagram showing the distance value between the infrared receiver and the target, and the value of reflected energy;
Fig. 5 is a flow chart showing the method for non-contact temperature measurement of the present invention;
Fig. 6 is a flow chart showing the method of the present invention according to another embodiment; and
Fig. 7 is a flow chart showing the method of the present invention according to yet another embodiment.

## DETAILED DESCRIPTION OF THE PREFERRED EMBODIMENTS

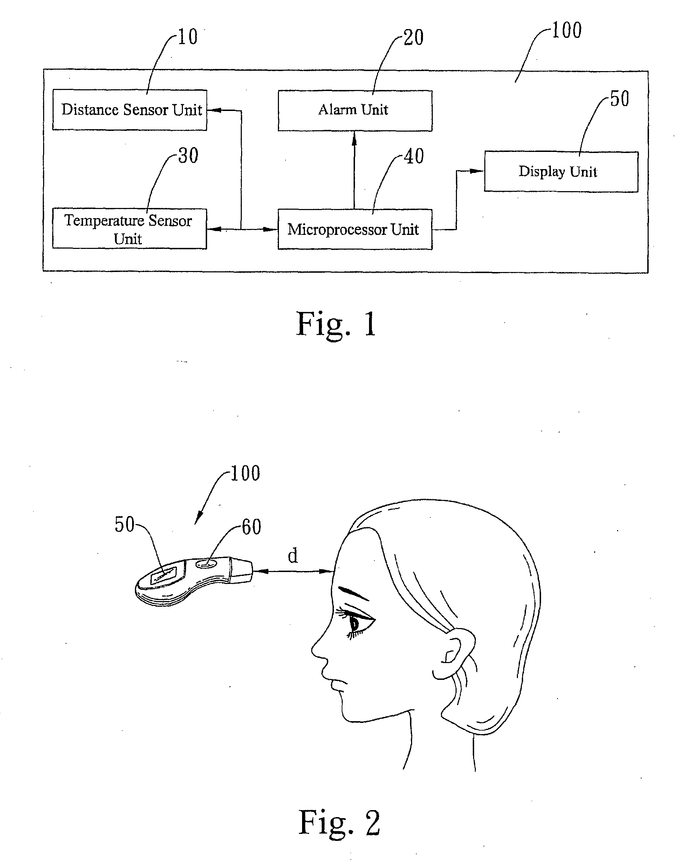

Referring to Fig. 1, the apparatus for non-contact temperature measurement 100 of the present invention includes a distance sensor unit 10 for measuring a target's distance value; an alarm unit 20 for giving an alarm when the distance sensor unit 10 measures a predetermined distance value d; a temperature sensor unit 30 for measuring the target's temperature when the alarm unit 20 gives the alarm; a microprocessor unit 40 for storing the predetermined distance value d and the temperature value measured by the temperature sensor unit 30, for processing the distance signals emitted by the distance sensor unit 10 and the temperature signals emitted by the temperature sensor unit 30, and for sending a command for the alarm unit 20 to give an alarm; and a display unit 50 for displaying the temperature value measured by the temperature sensor unit 30 and subsequently processed by the microprocessor unit 40.

The present invention further includes a push-button unit (not shown) for inputting a command. When the distance sensor unit 10 measures a predetermined distance of the target, an operator can input a command for the temperature sensor unit 30 to start measuring the target's temperature value. Furthermore, the push-button unit of the present invention is a button switch 60 (as shown in Fig. 2).

In this embodiment, the distance sensor unit 10 is an infrared sensor and the temperature sensor unit 30 is an infrared sensor or ultrasonic sensor for measuring a distance value and a temperature value. The alarm unit 20 is a speaker or an indicator light or a combination of both. If the alarm unit 20 is a speaker, the alarm message will be a long beep. If the alarm unit 20 is an indicator light, it will be an LED light.

Additionally, the present invention further includes an error identification mechanism. If the distance sensor unit 10 does not measure a predetermined distance value while the operator presses the button switch by mistake, the apparatus for non-contact temperature measurement 100 will not start measuring the target's temperature. Given that this error identification mechanism of circuit design can be achieved easily by those skilled in the prior art, this mechanism shall not be specified herein.

Referring to Fig. 2, a schematic view of using the apparatus of the present invention is shown. With the apparatus for non-contact temperature measurement 100, an operator points to a target whereof temperature is to be measured. In this embodiment, the target is a human forehead. The apparatus 100 is then moved forwards and backwards so that the distance sensor unit 10 of the apparatus can constantly measure the varying distances from the target; the operation does not stop until the distance sensor unit 10 measures a predetermined distance value d. When the predetermined distance value d set for the apparatus 100 is measured, the microprocessor unit 40 will send a command for the alarm unit 20 to give an alarm. The operator now presses the button switch 60, and the temperature sensor unit 30 starts measuring the target's temperature. The measured temperature value is stored in the microprocessor unit 40 and then displayed on the display unit 50.

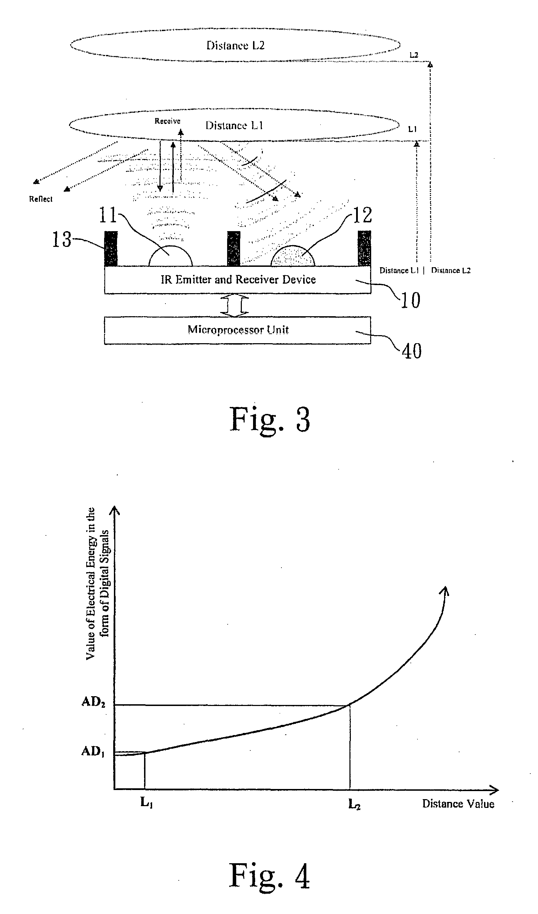

Referring to Fig. 3, the schematic illustration shows how the apparatus for non-contact temperature measurement of the present invention measures a target's distance. The distance sensor unit 10 of the present invention is an infrared radiation emitter and receiver device. The infrared emitter and receiver device 10, which measures the target's distance by a means associated with radiant energy, includes an infrared emitter 11 and an infrared receiver 12. Generally, a radiation wave has many characteristics, one of which being that it reflects from an object right after hitting the object. Moreover, a radiation wave has different conductivities in different media, which results in different speeds of a wave and furthermore, in different properties of a wave. Therefore, it is known that when the speed and conductivity of a radiation wave is fixed, a distance can be inferred from the properties, e.g., energy, of a reflected wave. Since infrared wave is a kind of radiation wave in certain waveband, it is used to obtain the abovementioned objective in this embodiment. The infrared emitter 11 emits a radiation containing energy, and the radiation reflects after hitting the target. The infrared receiver 12 then receives the reflected radiation containing energy as well. The energy of the reflected radiation is further converted to electrical energy. Accordingly, the distance between the infrared emitter and receiver device and the target can be identified by the voltage output.

Referring to Fig. 4, linear relationship can be observed between the distance values and the reflected energy values in a specific range of distance, as distance $L_1$ to distance $L_2$. The optimal distance of a temperature sensor unit lies in this range. Thus, this invention applies the linear relationship to measure distance. Further detail of said means is described as follows with reference to Fig. 3. The infrared emitter 11 emits a radiation that hits the target from a distance $L_1$ closest to the target; the infrared receiver 12 then receives the reflected radiation and identifies its energy. The analog signal of energy is transferred to digital signal $AD_1$. The distance $L_2$ farthest from the target can be calculated with the same method: the infrared emitter 11 emits a radiation to hit the target at a distance $L_2$; the infrared receiver 12 then receives another reflected radiation. The analog signal of energy is transferred to digital signal $AD_2$. Then, a slope between a point at the distance $L_1$ and a point at the distance $L_2$ can be calculated by applying the above-mentioned values to this slope formula: $S = \dfrac{AD_2 - AD_1}{L_2 - L_1}$. The calculation result is then defined in the microprocessor unit 40 to render a value $AD_n$ at every distance $L_n$.

To measure the target's temperature, the operator points the apparatus of the present invention to the target, and distance detection starts first, the process being: the infrared emitter 11 emits a radiation that hits the target; the infrared receiver 12 receives the radiation reflected from the target; the reflected radiant energy is converted into electrical energy value $AD_n$ in the form of digital signals and then sent to the microprocessor unit 40; the value $AD_n$ is applied to the slope formula, and the distance value $L_n$ between the infrared receiver 12 and the target is calculated by reversing the formula: $AD_n = ((L_n - L_1) \times S) + AD_1$; the apparatus 100 does not stop measuring distance until the predetermined distance value d is obtained; the microprocessor unit 40 then sends a command for the alarm unit 20 to give an alarm; the operator presses the button switch 60 to activate temperature measurement by the temperature sensor unit 30; the measured temperature value is recorded and stored; and finally, the stored temperature value is displayed on the display unit 50.

In this embodiment, an isolation board 13 is further disposed between the infrared emitter 11 and the infrared receiver 12 so that the infrared receiver 12 is ensured to receive the reflected radiant energy.

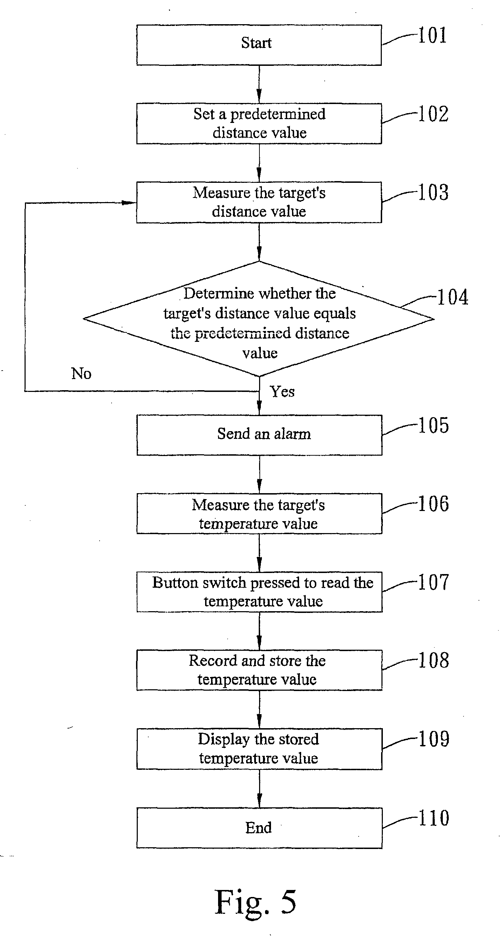

Referring to Fig. 5, the flow chart shows an embodiment of the method for non-contact temperature measurement of the present invention. In step 101, the process of measuring the target's temperature starts. In step 102, a predetermined distance value d is set. In step 103, the distance sensor unit 10 is employed to measure the target's distance value, and the measured distance value is sent to the microprocessor unit 40. In step 104, the microprocessor unit 40 receives the distance value measured by the distance sensor unit 10 and determines whether the measured distance value equals the predetermined distance value d; if yes, the operation proceeds to step 105, otherwise the operation goes back to step 103 to repeat measuring the target's distance value. In step 105, the microprocessor unit 40 sends a command to the alarm unit 20, making it send out an alarm. In step 106, upon sending a command to give an alarm, the microprocessor unit 40 also sends a command for the temperature sensor unit 30 to measure the target's temperature value. In step 107, the operator presses the button switch of the push-button to read the temperature value. In step 108, the measured temperature value is recorded and stored. In step 109, the recorded temperature value is displayed, and in step 110, the process for temperature measurement ends.

In step 103 of this embodiment, a distance sensor unit 10 is employed to measure the target's distance. The distance sensor unit 10 is an infrared emitter and receiver device that includes an infrared emitter 11 and an infrared receiver 12 (as shown in Fig. 3). The infrared emitter 11 emits a radiation that hits the target. The infrared receiver 12 receives the radiation reflected from the target and identifies its energy. The radiant energy is then converted to electrical energy in the form of digital signals. A distance $L_1$ closest to the target and a distance $L_2$ farthest from the target can be calculated with the same method. The respective radiant energy at distance $L_1$ and distance $L_2$ is then converted to electrical energy $AD_1$ and $AD_2$ in the form of digital signals. Then, a slope between a point at the distance $L_1$ and a point at the distance $L_2$ can be calculated by applying the above-mentioned values to this slope formula:

$$S = \frac{AD_2 - AD_1}{L_2 - L_1}$$

The calculation result is then defined in the microprocessor unit 40 to render a value $AD_n$ at every distance $L_n$. The value $AD_n$ is applied to the slope formula, and the distance value $L_n$ between the infrared receiver 12 and the target can be calculated by reversing the formula: $AD_n = ((L_n - L_1) \times S) + AD_1$.

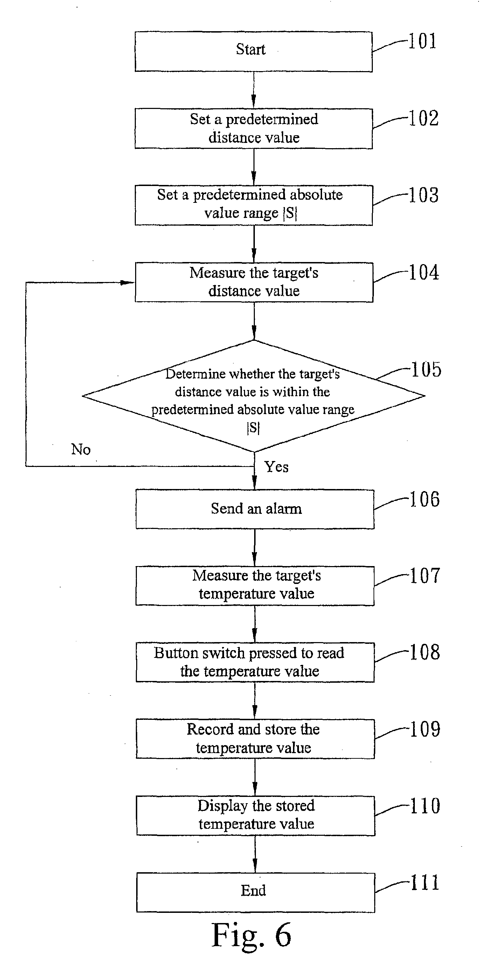

Referring to Fig. 6, the flow chart shows another embodiment of the method for non-contact temperature measurement of the present invention. In step 101, the process of measuring the target's temperature starts. In step 102, a predetermined distance value d is set. In step 103, a predetermined absolute value range |S| is set. In step 104, the distance sensor unit 10 is employed to measure the target's distance, and the measured distance value is sent to the microprocessor unit 40. In step 105, after receiving the distance value measured by the distance sensor unit 10, the microprocessor unit 40 then begins processing and determines whether the difference between the measured distance value and the predetermined distance value d is within the predetermined absolute value range |S| ; if yes, the operation proceeds to step 106, otherwise the operation goes back to step 104 to repeat measuring the target's distance value. In step 106, the microprocessor unit 40 sends a command to the alarm unit 20, making it send out an alarm. In step 107, upon sending a command to give an alarm, the microprocessor unit 40 also sends a command for the temperature sensor unit 30 to measure the target's temperature value. In step 108, the operator presses the button switch of the push-button to read the temperature value. In step 109, the measured temperature value is recorded and stored. In step 110, the recorded temperature value is displayed, and in step 111, the process for temperature measurement ends.

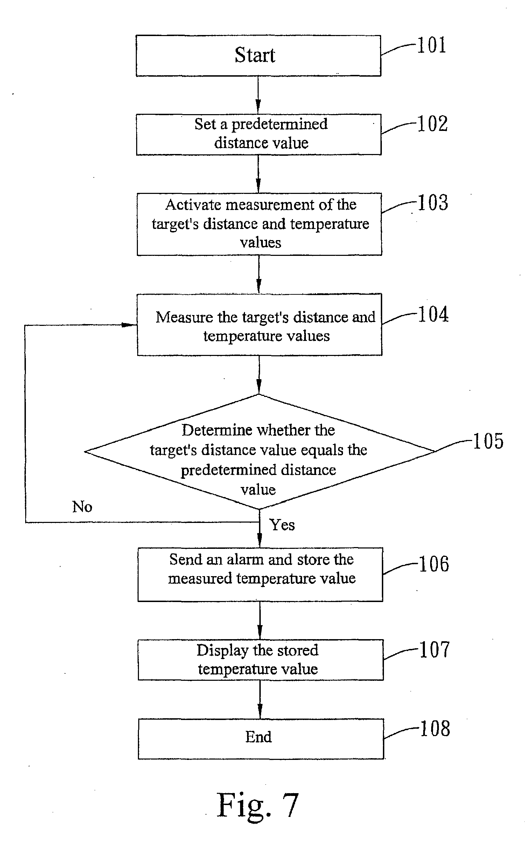

Referring to Fig. 7, the flow chart shows yet another embodiment of the method for non-contact temperature measurement of the present invention. In step 101, the process of measuring the target's temperature starts. In step 102, a predetermined distance value d is set. In step 103, the button switch of the push-button unit is pressed to activate measurement of the target's distance and temperature. In step 104, the distance sensor unit 10 measures the target's distance and the temperature sensor unit 30 measures the target's temperature; the measured distance value and the measured temperature value are then sent to the microprocessor unit 40. In step 105, upon receipt of the distance value measured by the distance sensor unit 10, the microprocessor unit 40 begins processing and determines whether the measured distance value equals the predetermined distance value d; if yes, the operation proceeds to step 106, otherwise the operation goes back to step 104 to repeat measurement of the distance value and temperature value. In step 106, the microprocessor unit 40 sends a command to the alarm unit 20, making it send out an alarm; at the same time, the microprocessor unit 40 sends a command for the temperature sensor unit 30 to record and store the measured temperature value. In step 107, the recorded temperature value is displayed, and in step 108, the process of temperature measurement ends.

The apparatus for non-contact temperature measurement according to the present invention enables operators to measure temperature faster and obtain a more accurate result, wherein uncertainties and errors during the process of temperature measurement are reduced.

## Claims

1. An apparatus for non-contact temperature measurement, comprising:

   an infrared radiation emitter and receiver device (11, 12) for emitting a radiation and receiving the radiation reflected from the target after hitting the target,
   **characterized in that**
   the radiant energy of the radiation reflected from the target after hitting the target is converted into electrical energy in the form of digital signals and the voltage output value of the electrical energy is measured for determining the target's distance; and further **in that** the apparatus comprises:

   an alarm unit (20) for giving an alarm when the radiation emitter and receiver device (11, 12) obtains a predetermined distance value;
   a temperature sensor unit (30) for measuring the target's temperature after the alarm unit (20) gives the alarm;
   a microprocessor unit (40) for storing the predetermined distance value and the temperature value measured by the temperature sensor unit (30) and for processing a distance signal indicating the target's distance Ln measured by the infrared radiation emitter and receiver device (11, 12) according to the linear relationship $ADn = ((Ln - L1) \times S) + AD1$, wherein AD1 is the digital signal of reflected energy from distance L1 and S is the slope $S = (AD2 - AD1)/(L2 - L1)$ of the linear relationship between the distance values and the reflected energy values in a specific range of distances L1, L2, and a temperature signal indicating the target's temperature measured by the temperature sensor unit, and for sending a command to the alarm unit so as to give an alarm when the target's distance value measured by the radiation emitter and receiver device (11, 12) equals the predetermined distance value; and
   a display unit for displaying the target's temperature value measured by the temperature sensor unit (30) and processed by the microprocessor unit (40) subsequently.

2. The apparatus for non-contact temperature measurement of claim 1, further comprising a push-button unit for inputting a command to the temperature sensor unit (30) to start measuring the target's temperature when the distance sensor unit measures the predetermined distance value.

3. The apparatus for non-contact temperature measurement of claim 2 wherein the push-button unit is a button switch (60).

4. The apparatus for non-contact temperature measurement of claim 1 wherein the infrared emitter and receiver device includes an infrared emitter and an infrared receiver.

5. The apparatus for non-contact temperature measurement of claim 4, wherein the infrared emitter is for emitting a radiation, and the infrared receiver is for receiving the radiation.

6. The apparatus for non-contact temperature measurement of claim 5 wherein an isolation board (13) is further disposed between the infrared emitter and the infrared receiver so that the infrared receiver is ensured to receive the reflected radiant energy.

7. The apparatus for non-contact temperature measurement of claim 1 wherein the temperature sensor unit (30) is an infrared sensor or an ultrasonic sensor.

8. The apparatus for non-contact temperature measurement of claim 1 wherein the alarm unit (20) is a speaker.

9. The apparatus for non-contact temperature measurement of claim 8 wherein the speaker gives an alarm message of long beep.

10. The apparatus for non-contact temperature measurement of claim 1 wherein the alarm unit (20) is an indicator light.

11. The apparatus for non-contact temperature measurement of claim 10 wherein the indicator light is an LED light.

12. The apparatus for non-contact temperature measurement of claim 1 wherein the alarm unit (20) comprises both a speaker and an indicator light.

13. A method for non-contact temperature measurement, including:

    setting a predetermined distance value;
    **characterized by**
    measuring a target's distance value by a means associated with radiant energy for emitting infrared radiation and receiving the radiation reflected from the target after hitting the target wherein the radiant energy of the radiation reflected from the target after hitting the target is converted into electrical energy in the form of digital signals and the voltage output value of the electrical energy is measured for determining the target's distance Ln according to the linear relationship ADn = ((Ln -L1) x S) + AD1, wherein AD1 is the digital signal of reflected energy from distance L1 and S is the slope S = (AD2 - AD1)/(L2 - L1) of the linear relationship between the distance values and the reflected energy values in a specific range of distances L1, L2;

determining whether the target's distance value equals the predetermined distance value;

giving an alarm when the target's distance value equals the predetermined distance value;

measuring the target's temperature value and storing the data into memory; and

displaying the stored measurement data.

14. The method for non-contact temperature measurement of claim 13, further including a step of pressing a button switch (60) after the step of giving an alarm so that measurement of the target's temperature is activated accordingly.

**Patentansprüche**

1. Vorrichtung zur berührungslosen Temperaturmessung umfassend:

eine Infrarotemitter- und Empfängervorrichtung (11, 12) zur Aussendung einer Strahlung und zum Empfang der Strahlung, die vom Ziel nach Auftreffen auf das Ziel reflektiert wird, **dadurch gekennzeichnet, dass** die Strahlungsenergie der vom Ziel nach Auftreffen auf das Ziel reflektierten Strahlung in elektrische Energie in Form von digitalen Signalen umgewandelt wird und der Ausgangsspannungswert der elektrischen Energie gemessen wird, um die Entfernung zum Ziel zu bestimmen; und ferner umfasst die Vorrichtung:

eine Alarmeinheit (20) zur Alarmgebung, wenn die Infrarotemitter- und Empfängervorrichtung (11, 12) einen vorbestimmten Entfernungswert erhält;

eine Temperatursensoreinheit (30) zur Messung der Temperatur des Ziels, nachdem die Alarmeinheit (20) einen Alarm abgegeben hat;

eine Mikroprozessoreinheit (40) zur Speicherung des vorbestimmten Entfernungswerts und des von der Temperatursensoreinheit (30) gemessenen Temperaturwerts und zur Bearbeitung eines Entfernungssignals, das die Entfernung Ln zum Ziel, die von der Infrarotemitter- und Empfängervorrichtung (11, 12) nach dem linearen Verhältnis ADn = ((Ln-L1) x S) + AD1 gemessen wird, anzeigt, wobei AD1 das digitale Signal der reflektierten Energie von Entfernung L1 ist und S die Steigung S = (AD2 - AD1)/(L2 - L1) des linearen Verhältnisses zwischen den Entfernungswerten und den reflektierten Energiewerten in einem bestimmten Bereich der Entfernungen L1, L2 ist, und eines Temperatursignals, das die Temperatur des Ziels, die durch die Temperatursensoreinheit gemessen wird, und zur Sendung eines Kommandos zur Alarmeinheit, um einen Alarm zu geben, wenn der von der Infrarotemitter- und Empfängervorrichtung (11, 12) gemessene Entfernungswert des Ziels dem vorbestimmten Entfernungswert entspricht; und

eine Anzeigevorrichtung zur Anzeige des Temperaturwerts des Ziels, der von der Temperatursensoreinheit (30) gemessen wird und danach von der Mikroprozessoreinheit (40) verarbeitet wird.

2. Eine Vorrichtung zur berührungslosen Temperaturmessung nach Anspruch 1, ferner umfassend eine Tastschaltereinheit zur Eingabe eines Kommandos an die Temperatursensoreinheit (30), um die Messung der Temperatur des Ziels zu veranlassen, wenn die Entfernungssensoreinheit den vorbestimmten Entfernungswert gemessen hat.

3. Eine Vorrichtung zur berührungslosen Temperaturmessung nach Anspruch 2, wobei die Tastschaltereinheit ein Drucktaster (60) ist.

4. Eine Vorrichtung zur berührungslosen Temperaturmessung nach Anspruch 1, wobei die Infrarotemitter- und Empfängervorrichtung einen Infrarotemitter und einen Infrarotempfänger umfasst.

5. Eine Vorrichtung zur berührungslosen Temperaturmessung nach Anspruch 4, wobei der Infrarotemitter eine Strahlung aussendet und der Infrarotempfänger eine Strahlung empfängt.

6. Eine Vorrichtung zur berührungslosen Temperaturmessung nach Anspruch 5, wobei ferner eine Trennplatte (13) zwischen dem Infrarotemitter und dem Infrarotempfänger angeordnet ist, so dass der Infrarotempfänger die reflektierte Strahlungsenergie empfängt.

7. Eine Vorrichtung zur berührungslosen Temperaturmessung nach Anspruch 1, wobei die Temperatursensoreinheit (30) ein Infrarotsensor oder ein Ultraschallsensor ist.

8. Eine Vorrichtung zur berührungslosen Temperaturmessung nach Anspruch 1, wobei die Alarmeinheit (20) ein Lautsprecher ist.

9. Eine Vorrichtung zur berührungslosen Temperaturmessung nach Anspruch 8, wobei der Lautsprecher einen Alarm in Form eines langen Pieptons gibt.

10. Eine Vorrichtung zur berührungslosen Temperaturmessung nach Anspruch 1, wobei die Alarmeinheit (20) eine Anzeigelampe ist.

11. Eine Vorrichtung zur berührungslosen Temperaturmessung nach Anspruch 10, wobei die Anzeigelampe eine LED-Anzeige ist.

12. Eine Vorrichtung zur berührungslosen Temperaturmessung nach Anspruch 1, wobei die Alarmeinheit (20) sowohl einen Lautsprecher als auch eine Anzeigelampe umfasst.

13. Verfahren zur berührungslosen Temperaturmessung umfassend:

die Einstellung eines vorbestimmten Entfernungswerts;

**dadurch gekennzeichnet, dass**

der Entfernungswert zum Ziel durch ein Mittel in Verbindung mit Strahlungsenergie zur Ausstrahlung einer Infrarotstrahlung und zum Empfang der nach dem Auftreffen auf das Ziel vom Ziel reflektierten Strahlung gemessen wird, wobei die Strahlungsenergie der nach dem Auftreffen auf das Ziel vom Ziel reflektierten Strahlung in elektrische Energie in Form von digitalen Signalen umgewandelt wird und der Spannungsausgangswert der elektrischen Energie gemessen wird, um die Entfernung des Ziels Ln nach dem linearen Verhältnis $ADn = ((Ln-L1) \times S) + AD1$ zu bestimmen, wobei AD1 das digitale Signal der reflektierten Energie von Entfernung L1 ist und S die Steigung $S = (AD2 - AD1)/(L2 - L1)$ des linearen Verhältnisses zwischen den Entfernungswerten und den reflektierten Energiewerten in einem bestimmten Bereich der Entfernungen L1, L2 ist;

bestimmt wird, ob der Entfernungswert des Ziels dem vorbestimmten Entfernungswert entspricht;

ein Alarm gegeben wird, wenn der Entfernungswert des Ziels dem vorbestimmten Entfernungswert entspricht;

der Temperaturwert des Ziels gemessen wird und die Daten im Speicher gespeichert werden; und

die gespeicherten Messdaten angezeigt werden.

14. Ein Verfahren zur berührungslosen Temperaturmessung nach Anspruch 13, ferner umfassend einen Schritt, bei dem ein Drucktaster (60) gedrückt wird, nachdem der Schritt der Alarmgebung erfolgt ist, um die Messung der Temperatur des Ziels zu aktivieren.

**Revendications**

1. Un appareil pour mesure de la température sans contact, comprenant :

un dispositif émetteur et récepteur de rayonnement infrarouge (11, 12) pour émettre un rayonnement et recevoir le rayonnement réfléchi par la cible après l'impact avec celle-ci,

**caractérisé en ce que**

l'énergie rayonnante du rayonnement réfléchi par la cible après l'impact avec celle-ci est convertie en énergie électrique sous la forme de signaux numériques et la valeur de sortie de tension de l'énergie électrique est mesurée pour déterminer la distance de la cible, et **en ce que** l'appareil comprend :

une unité d'alarme (20) pour donner une alarme lorsque dispositif émetteur et récepteur de rayonnement (11, 12) obtient une valeur de distance prédéterminée;

une unité de capteur de température (30) pour mesurer la température de la cible après que l'unité d'alarme (20) ait donné l' alarme ;

une unité à microprocesseur (40) pour enregistrer la valeur de distance prédéterminée et la valeur de température mesurée par l'unité de capteur de température (30), et pour traiter un signal de distance indiquant la distance de la cible Ln mesurée par le dispositif émetteur et récepteur de rayonnement infrarouge (11, 12) conformément à la relation linéaire $ADn = ((Ln - L1) \times S) + AD1$, où AD1 est le signal numérique de l'énergie réfléchie depuis la distance L1 et S est l'inclinaison $S = (AD2 - AD1)/(L2 - L1)$ de la relation linéaire entre les valeurs de distance et les valeurs d'énergie réfléchie dans une plage spécifique de distances L1, L2, et un signal de température indiquant la température de la cible mesurée par l'unité de capteur de température, et pour envoyer une instruction à l'unité d'alarme de façon à donner une alarme lorsque la valeur de distance de la cible mesurée par le dispositif émetteur et récepteur de rayonnement (11, 12) est égale à la valeur de distance prédéterminée; et

une unité d'affichage pour afficher la valeur de température de la cible mesurée par l'unité de capteur de température (30) et traitée par l'unité à microprocesseur (40) subséquemment.

2. L'appareil pour mesure de la température sans contact de la revendication 1, comprenant en outre une unité à bouton poussoir pour saisir une instruction destinée à l'unité de capteur de température (30) pour qu'elle commence la mesure de la température de la cible lorsque l'unité de capteur de distance mesure la valeur de distance prédéterminée.

3. L'appareil pour mesure de la température sans contact de la revendication 2, où l'unité à bouton poussoir est un commutateur à bouton (60).

4. L'appareil pour mesure de la température sans contact de la revendication 1, où le dispositif émetteur et récepteur infrarouge comprend un émetteur infrarouge et un récepteur infrarouge.

5. L'appareil pour mesure de la température sans contact de la revendication 4, où l'émetteur infrarouge est destiné à émettre un rayonnement, et où le récepteur infrarouge est destiné à recevoir le rayonnement.

6. L'appareil pour mesure de la température sans contact de la revendication 5, où un panneau isolant (13) est par ailleurs disposé entre l'émetteur infrarouge et le récepteur infrarouge de façon à ce que le récepteur infrarouge soit assuré de recevoir l'énergie rayonnante réfléchie.

7. L'appareil pour mesure de la température sans contact de la revendication 1, où l'unité de capteur de température (30) est un capteur infrarouge ou un capteur ultrasonique.

8. L'appareil pour mesure de la température sans contact de la revendication 1, où l'unité d'alarme (20) est un haut-parleur.

9. L'appareil pour mesure de la température sans contact de la revendication 8, où le haut-parleur donne un message d'alarme sous la forme d'un bip long.

10. L'appareil pour mesure de la température sans contact de la revendication 1, où l'unité d'alarme (20) est une lampe témoin.

11. L'appareil pour mesure de la température sans contact de la revendication 10, où la lampe témoin est une lampe à DEL.

12. L'appareil pour mesure de la température sans contact de la revendication 1, où l'unité d'alarme (20) comprend à la fois un haut-parleur et une lampe témoin.

13. Une méthode pour mesure de la température sans contact, consistant à :

régler une valeur de distance prédéterminée;
**caractérisée par**
la mesure d'une valeur de distance de la cible par un moyen associé à l'énergie rayonnante pour émettre un rayonnement infrarouge et recevoir le rayonnement réfléchi par la cible après l'impact avec celle-ci, où l'énergie rayonnante du rayonnement réfléchi par la cible après l'impact avec celle-ci est convertie en énergie électrique sous la forme de signaux numériques et la valeur de sortie de tension de l'énergie électrique est mesurée pour déterminer la distance de la cible $L_n$ conformément à la relation linéaire $AD_n = ((L_n - L_1) \times S) + AD_1$, où $AD_1$ est le signal numérique de l'énergie réfléchie depuis la distance $L_1$ et $S$ est l'inclinaison $S = (AD_2 - AD_1)/(L_2 - L_1)$ de la relation linéaire entre les valeurs de distance et les valeurs d'énergie réfléchie dans une plage spécifique de distances $L_1$, $L_2$ ;
déterminer si la valeur de distance de la cible est égale à la valeur de distance prédéterminée ;
donner une alarme lorsque la valeur de distance de la cible est égale à la valeur de distance prédéterminée ;
mesurer la valeur de température de la cible et enregistrer les données dans la mémoire, et afficher les données de mesure enregistrées.

14. La méthode pour mesure de la température sans contact de la revendication 13, comprenant en outre une étape consistant à appuyer sur un commutateur à bouton (60) après l'étape consistant à donner une alarme, de sorte que la mesure de la température de la cible soit activée en conséquence.

Fig. 1

Fig. 2

Fig. 3

Fig. 4

```
┌─────────────────────────────┐
│            Start            │──── 101
└─────────────────────────────┘
              │
              ▼
┌─────────────────────────────┐
│     Set a predetermined     │──── 102
│       distance value        │
└─────────────────────────────┘
              │
              ▼
┌─────────────────────────────┐
│     Measure the target's    │──── 103
│       distance value        │
└─────────────────────────────┘
              │
              ▼
          ◇─────────────◇
        ╱  Determine whether the ╲──── 104
       ╱  target's distance value equals ╲
       ╲  the predetermined distance ╱
        ╲        value        ╱
          ◇─────────────◇
    No          │ Yes
              ▼
┌─────────────────────────────┐
│        Send an alarm        │──── 105
└─────────────────────────────┘
              │
              ▼
┌─────────────────────────────┐
│     Measure the target's    │──── 106
│      temperature value      │
└─────────────────────────────┘
              │
              ▼
┌─────────────────────────────┐
│ Button switch pressed to read the │──── 107
│      temperature value      │
└─────────────────────────────┘
              │
              ▼
┌─────────────────────────────┐
│     Record and store the    │──── 108
│      temperature value      │
└─────────────────────────────┘
              │
              ▼
┌─────────────────────────────┐
│      Display the stored     │──── 109
│      temperature value      │
└─────────────────────────────┘
              │
              ▼
┌─────────────────────────────┐
│             End             │──── 110
└─────────────────────────────┘
```

# Fig. 5

```
┌─────────────────────────┐
│          Start          │────101
└─────────────────────────┘
             │
             ▼
┌─────────────────────────┐
│    Set a predetermined   │────102
│      distance value      │
└─────────────────────────┘
             │
             ▼
┌─────────────────────────┐
│ Set a predetermined absolute │────103
│     value range |S|      │
└─────────────────────────┘
             │
             ▼
┌─────────────────────────┐
│    Measure the target's  │────104
│      distance value      │
└─────────────────────────┘
             │
             ▼
        ╱─────────╲
       ╱ Determine  ╲
      ╱ whether the  ╲────105
     ╱ target's       ╲
     ╲ distance value is within the ╱
      ╲ predetermined absolute value range ╱
       ╲    |S|    ╱
        ╲─────────╱
   No         │ Yes
             ▼
┌─────────────────────────┐
│      Send an alarm       │────106
└─────────────────────────┘
             │
             ▼
┌─────────────────────────┐
│    Measure the target's  │────107
│    temperature value     │
└─────────────────────────┘
             │
             ▼
┌─────────────────────────┐
│ Button switch pressed to read │────108
│   the temperature value  │
└─────────────────────────┘
             │
             ▼
┌─────────────────────────┐
│    Record and store the  │────109
│    temperature value     │
└─────────────────────────┘
             │
             ▼
┌─────────────────────────┐
│    Display the stored    │────110
│    temperature value     │
└─────────────────────────┘
             │
             ▼
┌─────────────────────────┐
│          End            │────111
└─────────────────────────┘
```

Fig. 6

Fig. 7

**EP 2 045 590 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030099277 A